# EUROPÄISCHE PATENTSCHRIFT

(11) **EP 2 863 501 B1**
(45) Veröffentlichungstag und Bekanntmachung des Hinweises auf die Patenterteilung: **26.04.2023**
(21) Anmeldenummer: 14181358.4
(22) Anmeldetag: 19.08.2014
(51) Int. Cl.: H02G 3/12, H02B 1/40, H05K 5/02

(54) **Verbindungselement, Kastenteil und Bausatz zur Bildung eines in eine Wandnische einzubauenden Kastens**
Connecting element, box part, and kit for forming a box which can be installed in a wall recess
Élément de liaison, partie de caisson et kit destiné à former un caisson à insérer dans une niche

(30) Priorität: 17.10.2013 DE 102013221122; 23.12.2013 DE 102013114754
(43) Veröffentlichungstag der Anmeldung: 22.04.2015
(73) Patentinhaber: Hager Electro GmbH & Co. KG, 66440 Blieskastel (DE)
(72) Erfinder: Theuer, Markus, 66131 Ensheim (DE); Tornos Nunez, Sergi, 08520 Les Franqueses del Valles (ES)
(74) Vertreter: Cabinet Nuss

(56) Entgegenhaltungen:
- EP-A1- 1 835 587
- EP-A1- 2 296 238
- EP-A2- 0 944 144
- DE-A1- 4 310 071
- DE-U1- 29 512 560
- FR-A1- 2 698 516
- FR-A1- 2 987 943

## Beschreibung

Die Erfindung betrifft ein Verbindungselement und einen Bausatz zur Bildung eines in eine Wandnische einzubauenden Kastens für die Aufnahme von Einrichtungen zur Verteilung von elektrischer Energie in Gebäuden und/oder anderer Komponenten der Elektroinstallation.

Durch Benutzung bekannt sind in ihrer Größe und Ausstattung vorgegebene Verteilerkästen. Bei der Elektroinstallation wird aus den Verteilerkästen einer ausgewählt, der geeignet ist, die jeweils zu installierenden Vorrichtungen aufzunehmen.

Die DE 43 10 071 A1 offenbart eine Isolierstoffgehäuseanordnung, die aus zwei nebeneinander angeordneten und miteinander verbundenen Isolierstoffgehäusen gebildet ist. An den aufeinander zuweisenden Seitenwandungen der Isolierstoffgehäuse ist eine Durchtrittsöffnung vorgesehen, die von einem Mittelsteg im Bereich der freien Kanten der übrigen Seitenwandungen überdeckt ist.

Die EP 1 835 587 A1 und die EP 2 296 238 A1 offenbaren jeweils einen Kasten für einen Schaltschrank, welcher mittels durch dessen Rückwand führbarer Schrauben befestigt werden kann. Mindestens eine der Seitenwände des Kastens weist einen entfernbaren Teil auf, so dass ein Übergang zu einem benachbart angeordneten Kasten hergestellt werden kann.

Die FR 2 698 516 A1 offenbart eine Verbindungsschiene für elektrische Schaltschränke, mittels derer zwei elektrische Schaltschränke an aneinander liegenden Wänden zusammengesteckt werden können.

Die DE 295 12 560 U1 offenbart eine Verbindungsvorrichtung für zwei zur Aufnahme elektrischer Vorrichtungen eingerichtete Gehäuse, bei der ein Verbindungselement in Öffnungen aneinander liegender Wände eingeführt und mittels Riegeln von der Innenseite des jeweiligen Gehäuses fixiert wird, so dass die Gehäuse durch das Verbindungselement starr verbunden sind.

Der Erfindung liegt die Aufgabe zugrunde, einen Kasten der eingangs genannten Art zu schaffen, der sich einfach an Anforderungen anpassen lässt, die durch die Elektroinstallation gestellt werden.

Diese Aufgabe wird durch das in Anspruch 1 angegebene Verbindungselement und den in Anspruch 8 angegebenen Bausatz gelöst.

Das erfindungsgemäße Verbindungselement zur Bildung eines in eine Wandnische Kastens ist dazu eingerichtet, Kastenteile, die an zumindest je einer Seite offen sind, an den offenen Seiten miteinander zu verbinden. Das Verbindungselement weist ferner eine Einrichtung zur Befestigung des Kastens in einer Wandnische auf. Die Einrichtung zur Befestigung des Kastens in der Wandnische weist zumindest ein ausschwenkbares Ankerelement auf. Das Ankerelement ermöglicht es bspw., den Kasten an der Wand zu verklemmen.

Das Kastenteil ist an zumindest einer Seite offen und an der offenen Seite zur Aufnahme eines Verbindungselements eingerichtet, mittels dessen das Kastenteil zur Bildung des Kastens mit einem weiteren Kastenteil verbindbar ist.

Der erfindungsgemäße Bausatz umfasst zumindest zwei der vorgenannten Kastenteile, ggf. eine dafür vorgesehene Abdeckung, z.B. ein Blendrahmen, eine Tür, eine Klappe oder dergleichen, und zur Verbindung der Kastenteile zumindest eines der vorgenannten Verbindungselemente.

Der Kasten lässt sich aus den Kastenteilen und dem Verbindungselement in Größe und Funktionalität passend zu durch die Elektroinstallation gestellten Anforderungen zusammenstellen. Dazu können unterschiedliche Kastenteile vorgesehen sein, die ggf. verschiedene Größen aufweisen und/oder unterschiedlich ausgestattet sind. Der Kasten kann in der bevorzugten Ausführungsform der Erfindung durch die Kastenteile sowohl zur Aufnahme herkömmlicher Vorrichtungen der Elektroinstallation wie Leitungsschutzschaltern, FI-Schutzschaltern und dergleichen als auch zur Aufnahme von der Telekommunikation dienenden Geräten, beispielsweise einer Breitbandanschlussweiche, einem Modem, einem Router, einer Telefonanlage oder dergleichen vorbereitet werden.

In einer weiteren Ausgestaltung der Erfindung besteht der Kasten aus mehr als zwei Kastenteilen und mehr als einem Verbindungselement, wobei wenigstens ein, vorzugsweise zwischen zwei anderen Kastenteilen anzuordnendes, inneres Kastenteil an gegenüberliegenden Seiten offen und an diesen Seiten zur Verbindung über das Verbindungselement eingerichtet ist. Der Kasten kann nach Bedarf aus beliebig vielen Kastenteilen aufgebaut werden und es besteht die Möglichkeit, einen bereits installierten erfindungsgemäßen Kasten nachträglich mit einem Kastenteil oder mehreren Kastenteilen nachzurüsten.

In einer bevorzugten Ausführungsform der Erfindung ist das Verbindungselement dazu vorgesehen, die Kastenteile starr miteinander zu verbinden, so dass es Biegemomente zwischen den Kastenteilen übertragen kann. Die Kastenteile sind durch das Verbindungselement zweckmäßigerweise derart miteinander verbindbar, dass der zu bildende Kasten in seiner Gesamtheit einen ähnlich großen Widerstand gegen elastische Verformung aufweist wie ein vergleichbarer einteiliger Kasten. Vorteilhaft lässt er sich dann handhaben wie der einteilige Kasten.

In einer weiteren Ausgestaltung der Erfindung sind das Verbindungselement und das Kastenteil ineinander steckbar. Das Verbindungselement weist dazu zweckmäßigerweise ein Steckelement auf, das zum Einsatz in einer im Kastenteil gebildete Steckaufnahmeeinrichtung vorgesehen ist. Es kann ein Verbindungsglied umfassen, das zum Übergreifen eines Randes einer Seitenwand des Kastenteils, vorzugsweise zur Anordnung unter Einnahme einer stabilen Sitzposition auf der Seitenwand, eingerichtet ist.

Das Verbindungselement kann ferner in eine an dem Kastenteil gebildete Führungsnut einsetzbar, an dem Kastenteil einrastbar und/oder zur Verbindung mit dem Kastenteil mittels eines Befestigungsteils, vorzugsweise einer Schraube, einer Niete oder dergleichen, eingerichtet sein, beispielsweise durch bereits an dem Verbindungselement gebildete, ggf. mit einem Gewinde versehene, Bohrung.

In einer Ausgestaltung der Erfindung trennt das Verbindungselement die Kastenteile derart voneinander, dass die Kastenteile im Kasteninneren Fächer bilden. Vorteilhaft können die einzelnen Fächer zur Aufnahme von Vorrichtungen eines bestimmten Funktionsbereichs dienen. So kann eines der Fächer zur Aufnahme der genannten Vorrichtungen der Elektroinstallation und ein anderes der Fächer zur Aufnahme von der Telekommunikation dienenden Geräten eingerichtet sein.

Zur Bildung eines Durchgangs zwischen den durch das Verbindungsteil abgegrenzten Kastenteilen bzw. Fächern weist das Verbindungselement zweckmäßigerweise einen Durchbruch oder eine einseitig offene Ausnehmung auf, durch den bzw. die Kabel geführt werden können. Vorzugsweise ist der Durchbruch und/oder die Ausnehmung durch eine, ggf. in Nuten einschiebbare, Sperrplatte verschließbar, um die Fächer vollständig voneinander trennen zu können.

In einer Ausgestaltung der Erfindung ist das Verbindungselement derart gebildet, dass es die Kastenteile zueinander im Abstand hält. Vorteilhaft besteht damit Raum für eine Anordnung der genannten Abdeckung, vorzugsweise der genannte Blendrahmen oder die Tür, auf je einem der Kastenteile. Die Abdeckung ist vorzugsweise derart gebildet, dass sie auf einen oberen Rand der Seitenwände des jeweiligen Kastenteils und ggf. auf eine Oberseite des Verbindungselements aufsetzbar ist, wobei sie die Seitenwände vorzugsweise umgreift.

Vorstellbar ist, den Abstand zwischen den Kastenteilen und die Größe der Abdeckung derart vorzusehen, dass die Abdeckung das Verbindungselement halbseitig überdeckt, so dass der Kasten bei Abdeckung der einzelnen Kastenteile in seiner Gesamtheit nach außen abgeschlossen ist.

In dem Verbindungselement ist in einer weiteren Ausgestaltung der Erfindung ein zumindest teilweise nach außen geschlossener, vorzugsweise kastenartig geformter, Aufnahmeraum gebildet, der beispielsweise als Stauraum für Kleinteile, Pläne oder dergleichen, die ggf. bei späteren Installationsarbeiten benötigt werden, zur Aufnahme einer Kühleinrichtung zur thermischen Regulierung des Innenraums des Verteilerkastens und/oder für die Aufnahme eines Mittels zur Beleuchtung des Kastens dienen kann.

Der Aufnahmeraum kann ferner zur Aufnahme eines Anschlusselements, vorzugsweise zumindest einer Steckdose, einer Anschlussleiste und/oder einer Kabelklemme vorgesehen sein. Zweckmäßigerweise ist er auf seinen beiden den Kastenteilen zugewandten Seiten mit je einer Öffnung versehen, so dass das Anschlusselement von beiden Seiten des Verbindungselements her, d.h. von jedem Kastenteil aus, kontaktierbar ist.

Die Steckdose kann zum Anschluss der in dem Kasten anzuordnenden Vorrichtungen oder zur Versorgung der Vorrichtungen mit Strom vorgesehen sein.

Zweckmäßigerweise ist das Verbindungselement derart vorgesehen, dass zu oder von dem Anschlusselement führende Leitungen vom Verbindungselement aus direkt nach außen geführt, vorzugsweise durch das Verbindungselement hindurch zwischen den Kastenteilen an die Außenseite des gebildeten Kastens, führbar sind. Das Verbindungselement kann dann zur Zuführung von Leitungen in den Kasten genutzt werden.

In einer weiteren Ausgestaltung der Erfindung ist das Verbindungselement mit einer Halteeinrichtung versehen, die zur Anordnung eines Mittels zur Befestigung von in dem Kasten zu verlegenden Kabeln vorgesehen ist. Die Halteeinrichtung umfasst vorzugsweise eine Hutschiene, einen Zapfen oder eine Nut einer Schwalbenschwanzverbindung, einer Aufnahme für Klemmen und/oder eine Bohrung zur Aufnahme von Schrauben oder dergleichen. Das Befestigungsmittel kann durch Kabelbinder oder eine Kabelklemme gebildet sein.

Die Erfindung wird nachfolgend anhand von Ausführungsbeispielen und den beigefügten Zeichnungen, die sich auf die Ausführungsbeispiele beziehen, näher erläutert. Es zeigen in isometrischer Darstellung:
- Fig. 1: Kastenteile für die Verwendung in der Erfindung,
- Fig. 2: ein erfindungsgemäßes Verbindungselement in verschiedenen Ansichten,
- Fig. 3: einen erfindungsgemäßen Kasten,
- Fig. 4 - 6: Details des Kastens nach Fig. 3 in unterschiedlichen Konfigurationen,
- Fig. 7: Details eines weiteren erfindungsgemäßen Kastens, und
- Fig. 8: Details der Kastenteile nach Fig. 1.

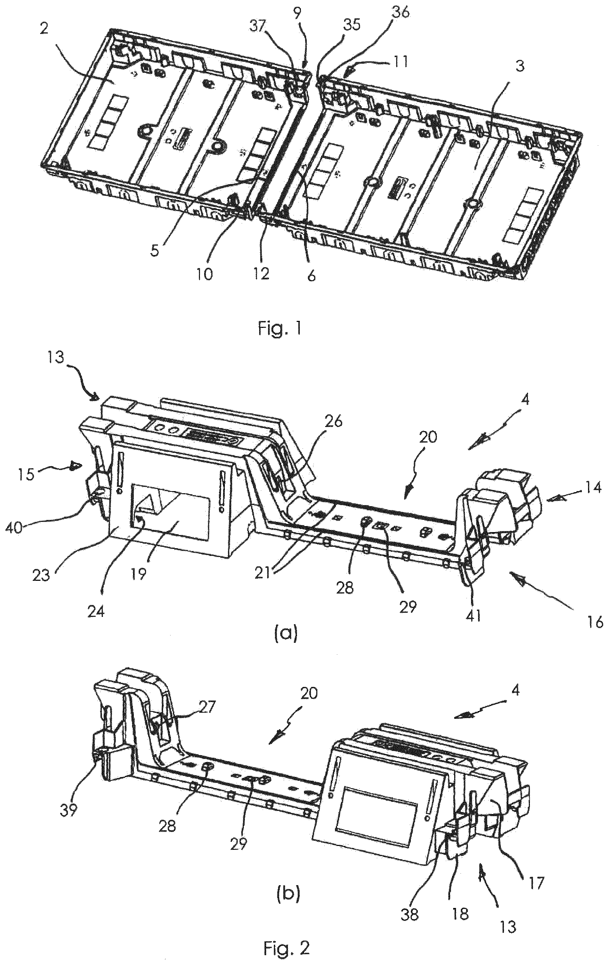

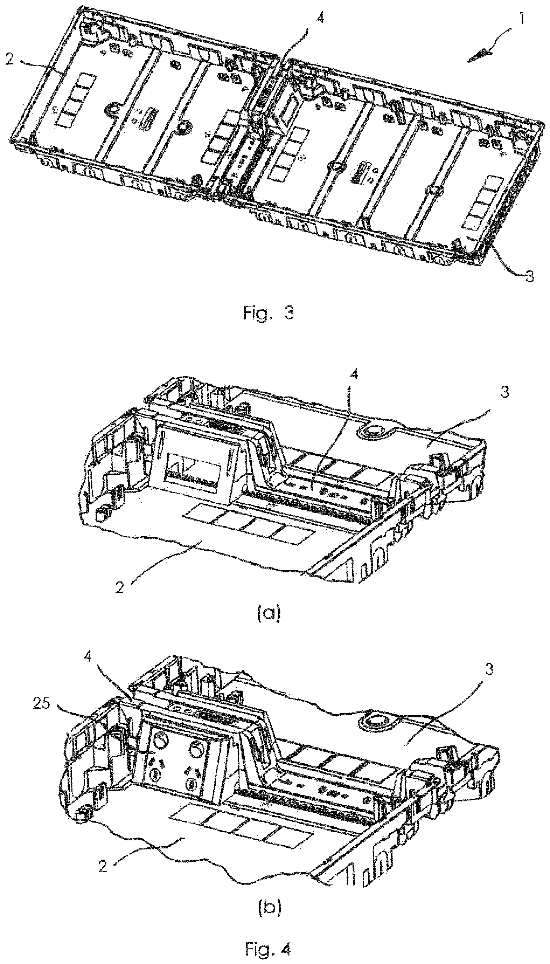

In Fig. 1 sind zwei Kastenteile 2,3 gezeigt, die sich mittels eines in Fig. 2 dargestellten Verbindungselements 4 zu einem in Fig. 4 abgebildeten Kasten 1 zusammenbauen lassen. Der Kasten 1 ist zur Bildung eines elektrischen Verteilers und/oder zur Aufnahme anderer Komponenten der Elektroinstallation von Gebäuden, beispielsweise der Telekommunikation dienenden Vorrichtungen eingerichtet, und ist zur Befestigung in einer unter Putz gebildeten oder an einer Hohlwand gebildeten Wandnische vorgesehen.

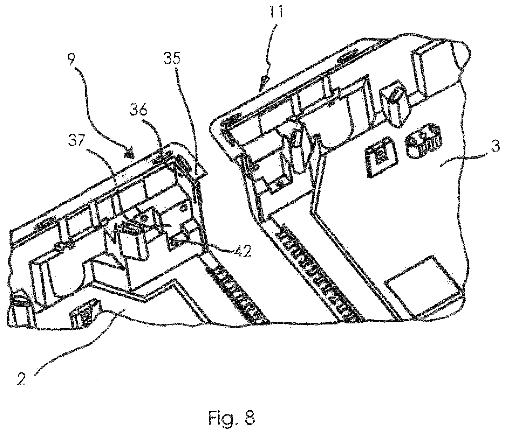

Wie insbesondere Fig. 1 zu entnehmen ist, ist jedes der Kastenteile 2,3 an Seiten 5,6, an denen die Kastenteile 2,3 miteinander verbindbar sind, offen. An den Seiten 5,6 der Kastenteile 2,3 sind jeweils gegenüberliegend die gleiche Form aufweisende Steckaufnahmeeinrichtungen 9,10,11,12 zur Aufnahme des Verbindungselements 4 gebildet, die genauer in Fig. 8 gezeigt sind.

Wie Fig. 2 und 8 zeigen, ist das Verbindungselement 4 mit vier Steckelementen 13,14,15,16 versehen, die in jeweils eine der Steckaufnahmen 9,10,11,12 einsteckbar sind. Jedes der Steckelemente 13,14,15,16 weist ein Halteglied 17, das zum Übergreifen eines Randes 35 einer nur abschnittsweise gebildeten Seitenwand 36 der Kastenteile 2,3 an den Seiten 5,6 vorgesehen ist, und ein Steckglied 18, welches zum Einstecken in eine Aussparung 37 der Steckaufnahmen 9,10,11,12 vorgesehen ist, auf (Bezugszeichen 35 bis 37 in Fig. 8 nur für Kastenteil 2 vorgesehen).

Die Steckelemente 13,14,15,16 sind mit je einer Bohrung 38,39,40,41 versehen, durch die zur Befestigung des Verbindungselements an den Kastenteilen 2,3 je eine hier nicht gezeigte Schraube führbar ist, die in Gewindebohrungen 42 am Boden der Aussparungen 37 der Steckaufnahmen 9,10,11,12 einschraubbar sind.

In Fig. 3 ist zu erkennen, wie das Verbindungselement 4 zur Bildung des Kastens 1 unter Anordnung der Steckelemente 13,14,15,16 in den Steckaufnahmen 9,10,11,12 zwischen den Kastenteilen 2,3 angeordnet wird. Durch das Verbindungselement 4 werden die Kastenteile 2,3 derart starr miteinander verbunden, dass der gebildete Kasten 1 biegestabil ist und sich handhaben lässt wie ein vergleichbarer einteiliger Kasten.

In dem Verbindungselement 4 ist ein seitlich geschlossener Aufnahmeraum 23 gebildet, der an seinen den Kastenteilen 2,3 zugewandten Seiten jeweils eine Öffnung 19 aufweist. Wie Fig. 4b zeigt, lassen sich in die Öffnungen 19, ggf. von beiden Seiten des Verbindungselements 4 her, Steckdosen 25 einsetzen. Ferner kann der Aufnahmeraum 23 als Stauraum für Kleinteile oder Pläne oder zur Aufnahme einer Beleuchtung für das Kasteninnere oder einer Kühleinrichtung für den Kasten 1 genutzt werden.

In den Aufnahmeraum 23 lassen sich durch einen Kanal 24 von an den Seiten des Kastens 1 anzuordnenden Enden des Verbindungselements 4 her zu der Steckdose 25 Leitungen führen.

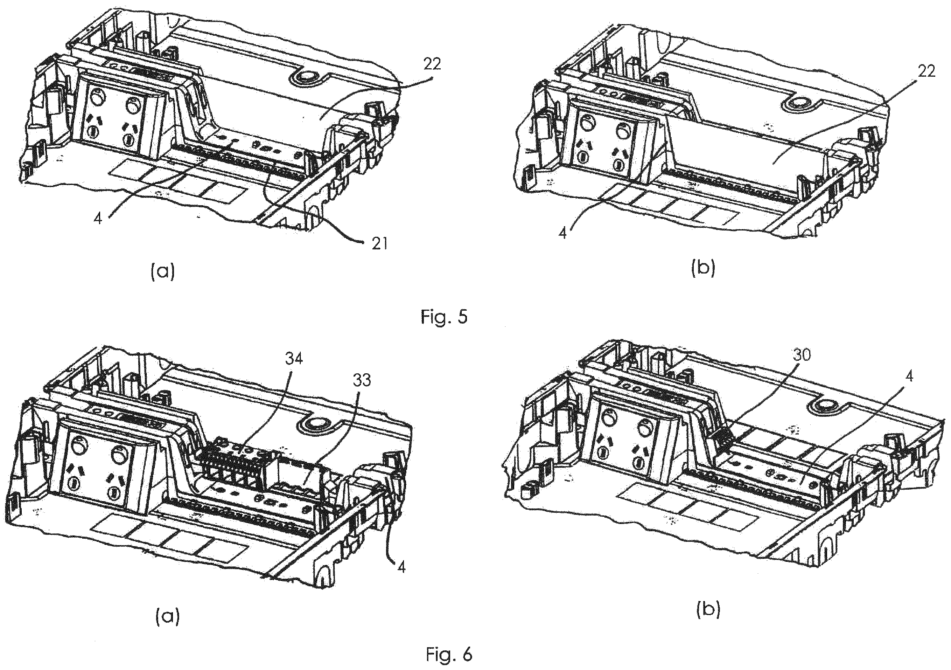

In dem Verbindungselement 4 ist ferner eine Aussparung 20 vorgesehen, durch die hindurch Kabel von einem Kastenteil 2,3 zu dem anderen Kastenteil 2,3 geführt werden können. In der Aussparung 20 sind Einrichtungen zur Aufnahme von Befestigungsmitteln für die Kabel vorgesehen, nämlich Ausnehmungen 26,27 zum Einsetzen einer mit einer Kabelklemme 34 versehenen Traverse 33 (Fig. 6a) oder zum direkten Einsatz einer mit entsprechenden Befestigungsmitteln versehene Klemme 30 (Fig. 6b). Darüber hinaus sind am Boden der Aussparung 20 Stege 28 zur Aufnahme von Kabelbinder gebildet. Ferner sind an Stellen 29 solche Stege auch auf der Rückseite des Bodens der Aussparung 20 gebildet. Die letztgenannten Stege dienen zur Aufnahme von Kabelbinder für Leitungen, die entlang der Rückseite des Kastens 1 anzuordnen sind.

In dem Verbindungselement 4 sind parallel und im Abstand voneinander zwei Nuten 21 gebildet, in die wahlweise eine Sperrplatte 22 einsetzbar ist, mit der sich die Aussparung 20, wie Fig. 5 zeigt, verschließen lässt, um die beiden Kastenteile 2,3 voneinander zu trennen.

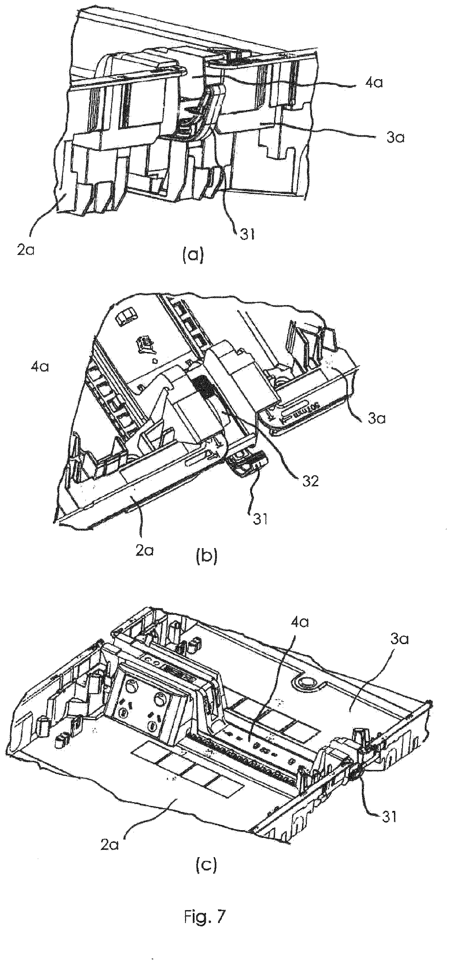

Fig. 7 zeigt ein weiteres erfindungsgemäßes Verbindungselement 4a, das an seinen beiden Enden einen Anker 31 aufweist, mittels dessen sich ein aus Kastenteilen 2a,3a und dem Verbindungselement 4a gebildeter Kasten an einer Wand, an der der Kasten zu installieren ist, verklemmen lässt. Wie insbesondere Fig. 7b zeigt, ist auf der Oberseite des Verbindungselements 4a ein Hebel 32 gebildet, mittels dessen sich der Anker 31 in eine Verankerungsposition bewegen lässt. Vorteilhaft lässt sich der Kasten, insbesondere aufgrund der starren Ausbildung der Kastenteile 2a,3a und des Verbindungselements 4a, bereits durch Anlegen der Anker 31 a an der Seitenwand stabil in der Wandnische anordnen.

## Patentansprüche

1. Verbindungselement für einen Bausatz zur Bildung eines in eine Wandnische einzubauenden Kastens (1), der für die Aufnahme von Einrichtungen zur Verteilung von elektrischer Energie in Gebäuden und/oder anderer Komponenten der Elektroinstallation eingerichtet ist und Kastenteile (2,3) umfasst, die an zumindest je einer Seite (5,6) offen sind, wobei das Verbindungselement (4) dazu eingerichtet ist, die Kastenteile (2,3) an den offenen Seiten (5,6) miteinander zu verbinden, **dadurch gekennzeichnet, dass** das Verbindungselement ferner eine Einrichtung zur Befestigung des Kastens (1) in der Wandnische aufweist, wobei die Einrichtung zur Befestigung des Kastens (1) in der Wandnische zumindest ein ausschwenkbares Ankerelement (31) aufweist.

2. Verbindungselement nach Anspruch 1, **dadurch gekennzeichnet,**
**dass** das Verbindungselement (4) dazu vorgesehen ist, die Kastenteile (2,3) derart miteinander zu verbinden, dass der zu bildende Kasten (1) in seiner Gesamtheit starr ist.

3. Verbindungselement nach Anspruch 1 oder 2, **dadurch gekennzeichnet, dass** das Verbindungselement (4) und zumindest eines der Kastenteile (2,3) ineinander steckbar sind und/oder aneinander einrastbar sind und/oder zur gegenseitigen Verbindung mittels eines Befestigungsmittels eingerichtet sind.

4. Verbindungselement nach einem der Ansprüche 1 bis 3, **dadurch gekennzeichnet, dass** das Verbindungselement (4) ein Verbindungsglied (17) umfasst, das zum Übergreifen eines Randes (35) einer Seitenwand des Kastenteils (2,3) eingerichtet ist.

5. Verbindungselement nach einem der Ansprüche 1 bis 4, **dadurch gekennzeichnet, dass** das Verbindungselement (4) zur Bildung eines Durchgangs zwischen den Kastenteilen (2,3) einen Durchbruch (19) und/oder eine einseitig offene Ausnehmung (20) aufweist, wobei der Durchbruch (19) und/oder die Ausnehmung (20) durch eine Sperrplatte (22) verschließbar ist.

6. Verbindungselement nach einem der Ansprüche 1 bis 5, **dadurch gekennzeichnet, dass** das Verbindungselement (6) dazu eingerichtet ist, die Kastenteile (2,3) in Abstand voneinander zu halten.

7. Verbindungselement nach einem der Ansprüche 1 bis 6, **dadurch gekennzeichnet, dass** das Verbindungselement (4) zur Aufnahme eines Anschlusselements und/oder eines Mittels (29;30) zur Befestigung von Kabeln eingerichtet ist, oder mit dem Anschlusselement versehen ist.

8. Bausatz umfassend ein Verbindungselement (4) und mindestens zwei Kastenteile (2, 3) zur Bildung eines in eine Wandnische einzubauenden Kastens (1), wobei die Kastenteile (2, 3) für die Aufnahme von Einrichtungen zur Verteilung von elektrischer Energie in Gebäuden und/oder anderer Komponenten der Elektroinstallation eingerichtet ist, wobei die Kastenteile (2,3) an zumindest einer Seite (5,6) offen sind und an der offenen Seite (5,6) zur Aufnahme des Verbindungselements (4) nach einem der Ansprüche 1 bis 7 eingerichtet sind, mittels dessen die Kastenteile (2,3) zur Bildung des Kastens (1) verbindbar sind.

## Claims

1. Connecting element for a kit for forming a box (1) to be installed in a wall recess, which is configured to receive devices for distributing electrical energy in buildings and/or other components of the electrical installation and comprises box parts (2, 3), which are open on at least one side (5, 6), wherein the connecting element (4) is configured to connect the box parts (2, 3) to one another at the open sides (5, 6), **characterized in that** the connecting element further has a device for fixing the box (1) in the wall recess, wherein the device for fixing the box (1) in the wall recess has at least one anchor element (31) that can be pivoted out.

2. Connecting element according to Claim 1, **characterized in that** the connecting element (4) is provided to connect the box parts (2, 3) to one another in such a way that the box (1) to be formed is rigid as a whole.

3. Connecting element according to Claim 1 or 2, **characterized in that** the connecting element (4) and at least one of the box parts (2, 3) can be plugged into one another and/or latched to one another and/or are configured to be connected to each other by a fastening means.

4. Connecting element according to one of Claims 1 to 3, **characterized in that** the connecting element (4) comprises a connecting member (17) which is configured to engage over an edge (35) of a side wall of the box part (2, 3).

5. Connecting element according to one of Claims 1 to 4, **characterized in that** to form a passage between the box parts (2, 3), the connecting element (4) has an aperture (19) and/or a recess (20) open on one side, wherein the aperture (19) and/or the recess (20) can be closed by a blocking plate (22).

6. Connecting element according to one of Claims 1 to 5, **characterized in that** the connecting element (6) is configured to hold the box parts (2, 3) at a distance from one another.

7. Connecting element according to one of Claims 1 to 6, **characterized in that** the connecting element (4) is configured to receive a connection element and/or a means (29; 30) for fixing cables, or is provided with the connection element.

8. Kit comprising a connecting element (4) and at least two box parts (2, 3) for forming a box (1) to be installed in a wall recess, wherein the box parts (2, 3) are configured to receive devices for distributing electrical energy in buildings and/or other components of the electrical installation, wherein the box parts (2, 3) are open on at least one side (5, 6) and, on the open side (5, 6), are configured to receive the connecting element (4) according to one of Claims 1 to 7, by means of which the box parts (2, 3) can be connected to form the box (1).

## Revendications

1. Elément de liaison pour un kit destiné à former un caisson (1) à installer dans une niche murale et qui est conçu pour recevoir des équipements servant à distribuer de l'énergie électrique dans des bâtiments et/ou d'autres composants de l'installation électrique et comprend des parties de caisson (2, 3) qui sont ouvertes sur au moins un côté (5, 6) respectivement, dans lequel l'élément de liaison (4) est conçu pour relier les parties de caisson (2, 3) l'une à l'autre sur les côtés ouverts (5, 6),
**caractérisé en ce que** l'élément de liaison présente en outre un équipement pour fixer le caisson (1) dans la niche murale, dans lequel l'équipement servant à fixer le caisson (1) dans la niche murale présente au moins un élément d'ancrage pivotant (31).

2. Elément de liaison selon la revendication 1, **caractérisé en ce que** l'élément de liaison (4) est prévu pour relier les parties de caisson (2, 3) l'une à l'autre de telle sorte que le caisson (1) à former est rigide dans son ensemble.

3. Elément de liaison selon la revendication 1 ou 2, **caractérisé en ce que** l'élément de liaison (4) et au moins l'une des parties de caisson (2, 3) peuvent être enfichés l'un dans l'autre et/ou peuvent être enclenchés l'un dans l'autre et/ou sont conçus pour une liaison mutuelle à l'aide d'un moyen de fixation.

4. Elément de liaison selon l'une quelconque des revendications 1 à 3, **caractérisé en ce que** l'élément de liaison (4) comprend un organe de liaison (17) qui est conçu pour chevaucher un bord (35) d'une paroi latérale de la partie de caisson (2, 3).

5. Elément de liaison selon l'une quelconque des revendications 1 à 4, **caractérisé en ce que** pour former un passage entre les parties de caisson (2, 3), l'élément de liaison (4) présente un ajour (19) et/ou un évidement (20) ouvert d'un côté, dans lequel l'ajour (19) et/ou l'évidement (20) peuvent être fermés par une plaque d'arrêt (22).

6. Elément de liaison selon l'une quelconque des revendications 1 à 5, **caractérisé en ce que** l'élément de liaison (6) est conçu pour maintenir les parties de caisson (2, 3) à distance l'une de l'autre.

7. Elément de liaison selon l'une quelconque des revendications 1 à 6, **caractérisé en ce que** l'élément de liaison (4) est conçu pour recevoir un élément de raccordement et/ou un moyen (29 ; 30) pour fixer des câbles, ou est muni de l'élément de raccordement.

8. Kit, comprenant un élément de liaison (4) et au moins deux parties de caisson (2, 3) pour former un caisson (1) à installer dans une niche murale, dans lequel les parties de caisson (2, 3) sont conçues pour recevoir des équipements servant à distribuer de l'énergie électrique dans des bâtiments et/ou d'autres composants de l'installation électrique, dans lequel les parties de caisson (2, 3) sont ouvertes sur au moins un côté (5, 6) et sont conçues sur le côté ouvert (5, 6) pour recevoir l'élément de raccordement (4) selon l'une quelconque des revendications 1 à 7, au moyen duquel les parties de caisson (2, 3) peuvent être reliées pour former le caisson (1).
